# EUROPÄISCHE PATENTSCHRIFT

(11) **EP 3 997 330 B1**
(45) Veröffentlichungstag und Bekanntmachung des Hinweises auf die Patenterteilung: **11.09.2024**
(21) Anmeldenummer: 20739339.8
(22) Anmeldetag: 08.07.2020
(51) Int. Cl.: F03D 1/06

(54) **ROTORBLATT UND WINDENERGIEANLAGE**
ROTOR BLADE AND WIND TURBINE
PALE DE ROTOR ET ÉOLIENNE

(30) Priorität: 12.07.2019 DE 102019119027
(43) Veröffentlichungstag der Anmeldung: 18.05.2022
(73) Patentinhaber: Wobben Properties GmbH, 26607 Aurich (DE)
(72) Erfinder: MÖLLER, Christian, 26603 Aurich (DE); MAASS, Hauke, 8000 Aarhus (DE); STEMBERG, Jochen, 26607 Aurich (DE)
(74) Vertreter: Eisenführ Speiser
(86) Internationale Anmeldenummer: PCT/EP2020/069269
(87) Internationale Veröffentlichungsnummer: WO 2021/008972

(56) Entgegenhaltungen:
- DE-A1- 102008 052 858
- US-A1- 2012 070 299

## Beschreibung

Die Erfindung betrifft ein Rotorblatt einer Windenergieanlage, eine zugehörige Windenergieanlage und ein zugehöriges Verfahren.

Windenergieanlagen sind grundsätzlich bekannt, sie erzeugen elektrische Leistung aus Wind. Moderne Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Der Rotor umfasst in der Regel ein, zwei oder mehrere gleichlange Rotorblätter. Die Rotorblätter weisen ein aerodynamisches Profil auf, durch das jedes Rotorblatt eine Auftriebskraft erfährt und somit der Rotor durch Wind in eine rotatorische Bewegung versetzt wird.

Bei der Auslegung von Rotorblättern für Windenergieanlagen muss unter anderem ein Kompromiss zwischen einem möglichst großen Auftrieb, dem Luftwiderstand und der Stabilität des Rotorblattes gefunden werden. Grundsätzlich ist bekannt, dass ein Profil eines Rotorblattes, das bei niedrigen Windgeschwindigkeiten einen hohen Auftrieb erzeugt, in der Regel einen hohen Luftwiderstand bei höheren Windgeschwindigkeiten aufweist. Außerdem wird bei der Konstruktion neben den aerodynamischen Eigenschaften des Rotorblattes zusätzlich sichergestellt, dass das Rotorblatt strukturellen Anforderungen genügt, beispielsweise einem Winddruck bei Sturm standhält und eine lange Lebensdauer aufweist. Insbesondere bei Schwachwindanlagen mit großen Nabenhöhen und großen Rotordurchmessern von derzeit bis zu 160 Metern sind die strukturellen Anforderungen an Rotorblätter hoch. Vor allem die entstehenden Biegemomente in mittleren und nabennahen Rotorblattbereichen erfordern eine besondere strukturelle Auslegung des Rotorblattes, damit die entstehenden Biegemomente und daraus resultierenden Kräfte aufgenommen werden können und nicht zu einem Versagen des Rotorblatts führen. Die existierenden Rotorblätter bieten verschiedene Vorteile, jedoch sind weitere Verbesserungen wünschenswert.

In der Regel werden die Rotorblätter von Windenergieanlagen aus sogenannten Profilfamilien erstellt. Bei diesen Profilfamilien handelt es sich um eine Serie von Profilen mit beispielsweise unterschiedlicher relativer Dicke, aus denen ein Rotorblatt von der Blattwurzel, die üblicherweise eine hohe relative Dicke aufweist, bis zur Blattspitze, die eine geringe relative Dicke aufweist, aufgezogen wird. Die Profile einer solchen Profilfamilie sind in ihren Eigenschaften in der Regel ähnlich und auf geometrische Kompatibilität optimiert, wobei die Dickenrücklage ein wichtiger Faktor ist. Dies führt dazu, dass innerhalb einer Profilfamilie in der Regel keine größeren Änderungen der Dickenrücklage von einem Profil zum jeweiligen Nachbarprofil auftreten. Dadurch ergibt sich ein annähernd konstanter bzw. monotoner Verlauf der Dickenrücklage über den Radius an einem Rotorblatt.

US 2012/0070299 A1 betrifft ein Rotorblatt einer Windkraftanlage, das einen Wurzelbereich mit einem im Wesentlichen kreisförmigen oder elliptischen Profil, der der Nabe am nächsten ist, und einen Schaufelbereich mit einem auftriebserzeugenden Profil aufweist, das am weitesten von der Nabe entfernt ist. Ein Übergangsbereich weist einen Basisteil mit einer Innenabmessung auf, die sich in radialer Richtung des Rotorblattes derart linear ändert, dass ein Induktionsfaktor des ersten Basisteils ohne Strömungsänderungseinrichtungen an einem Rotorauslegungspunkt von einem Zielinduktionsfaktor abweicht. Das erste Längssegment ist mit einer Anzahl erster strömungsändernder Vorrichtungen versehen, die so angeordnet sind, dass sie die aerodynamischen Eigenschaften des ersten Längssegments so einstellen, dass sie im Wesentlichen den Zielinduktionsfaktor am Auslegungspunkt erfüllen.

Das Deutsche Patent- und Markenamt hat in der Prioritätsanmeldung zu vorliegender Anmeldung folgenden Stand der Technik recherchiert: DE 10 2012 206 109 B3, DE 10 2008 052 858 A1, DE 10 2013 202 666 A1, DE 10 2017 124 861 A1, DE 20 2013 004 881 U1, EP 2 284 389 A2, EP 3 343 024 A1.

Vor diesem Hintergrund ist es eine Aufgabe der vorliegenden Erfindung, ein Rotorblatt einer Windenergieanlage, eine zugehörige Windenergieanlage und ein zugehöriges Verfahren bereitzustellen, die einen oder mehrere der genannten Nachteile vermindern oder beseitigen. Insbesondere ist es eine Aufgabe der vorliegenden Erfindung, ein Rotorblatt bereitzustellen, das bei Steigerung der aerodynamischen Leistung gleichzeitig eine verbesserte strukturelle Auslegung ermöglicht.

Gemäß einem ersten Aspekt wird die Aufgabe gelöst durch ein Rotorblatt für eine Windenergieanlage, das sich in Längsrichtung mit einem Profilverlauf von einem Blattanschluss zu einer Blattspitze erstreckt, wobei der Profilverlauf einen Verlauf eines Auftriebsbeiwerts aufweist, umfassend einen an den Blattanschluss angrenzenden Nabenabschnitt und einen an die Blattspitze angrenzenden Spitzenabschnitt, einen an den Nabenabschnitt und an den Spitzenabschnitt angrenzenden Mittelabschnitt, wobei der Mittelabschnitt im Wesentlichen solche Profilschnitte aufweist, die eine als Verhältnis aus maximaler Profildicke zu Profiltiefe definierte relative Profildicke zwischen 20 % und 30 % aufweisen, und wobei der Mittelabschnitt ein lokales Minimum des Verlaufs des Auftriebsbeiwertes aufweist.

Der Profilverlauf umfasst eine endliche Anzahl an Profilschnitten. Ein Profilschnitt entspricht insbesondere dem Querschnitt des Rotorblattes an einer beliebigen Stelle in Längsrichtung zwischen dem Blattanschluss und der Blattspitze. Dieser Querschnitt ist insbesondere dadurch charakterisiert, dass eine Flächenorthogonale dieses Querschnitts im Wesentlichen parallel zur Längsrichtung des Rotorblattes ausgerichtet ist.

Ein Profilschnitt kann beispielsweise mittels der Profiltiefe, der Profildicke bzw. der relativen Profildicke, der relativen Dickenrücklage, der Wölbung bzw. der relativen Wölbung, der relativen Wölbungsrücklage und dem Nasenradius charakterisiert werden.

Darüber hinaus werden Rotorblätter durch aerodynamische Beiwerte beschrieben. Die dimensionsbehafteten Kräfte und Momente eines Rotorblattes sind proportional zum Quadrat der Anströmgeschwindigkeit, zur Dichte des Fluids sowie zur Flügelfläche. Um die aerodynamischen Eigenschaften verschiedener Profile besser charakterisieren zu können, werden dimensionslose aerodynamische Beiwerte genutzt. Hierzu werden die Kräfte mit dem Staudruck und der Fläche, das Moment zusätzlich mit der Momentenbezugslänge, dimensionslos dargestellt. Bei Rotorblattprofilen wird als Momentenbezugslänge die Profiltiefe T gewählt.

Die wichtigsten aerodynamischen Beiwerte sind der Auftriebsbeiwert, der Widerstandsbeiwert und der Momentenbeiwert. Aufgrund der Abhängigkeiten dieser Beiwerte, insbesondere des Auftriebsbeiwerts, vom Anstellwinkel sind diese Beiwerte abhängig von den Betriebsbedingungen. Aufgrund dessen ist bei der Auslegung von Rotorblättern für Windenergieanlagen mit einem Auslegungsauftriebsbeiwert zu rechnen, bei dem die im Betrieb des Rotorblatts variablen Größen als Auslegungskonstanten gewählt sind. Folglich ist der im Vorherigen genannte Auftriebsbeiwert, bzw. die im Vorherigen genannten Auftriebsbeiwerte des Rotorblatts gemäß dem ersten Aspekt, vorzugsweise als Auslegungsauftriebsbeiwert bzw. als Auslegungsauftriebsbeiwerte zu verstehen.

Das Rotorblatt weist einen Profilverlauf auf, der sich durch unterschiedliche Profilschnitte entlang der Längsrichtung des Rotorblatts auszeichnet. Eine Variable dieses Profilverlaufs ist der Auftriebsbeiwert, der entlang des Profilverlaufs einen Verlauf aufweist. Der Verlauf des Auftriebsbeiwerts zeichnet sich insbesondere durch unterschiedlich hohe einzelne Auftriebsbeiwerte aus.

Der Verlauf des Auftriebsbeiwertes weist im Mittelabschnitt ein lokales Minimum auf. Ein Profilschnitt mit einem niedrigen Auftriebsbeiwert kann in der Regel eine hohe Gleitleistung aufweisen, wenn er einen besonders niedrigen Widerstand aufweist. Bei guter Rotorleistung kann unter Verwendung eines solchen Profils die Blatttiefe vergrößert werden und damit der zur Verfügung stehende strukturelle Bauraum bzw. die zur Verfügung stehende strukturelle Bautiefe vergrößert werden. Dadurch kann beispielsweise ein größeres polares Widerstandsmoment in der tragenden Struktur des Rotorblattes realisiert werden. Dies führt zu leichteren und steiferen Rotorblättern. Die erzielbare Rotorleistung wird durch die hohe Gleitleistung und die vergleichsweise geringen Auftriebsbeiwerte im Bereich angrenzend an das lokale Minimum im Mittelabschnitt im Wesentlichen nicht negativ beeinflusst.

Im strukturell in der Regel geringbelasteten Spitzenabschnitt ist vorzugsweise vorgesehen, dass die Profiltiefe aus Betriebslastgründen im Vergleich zum Mittelabschnitt gering ist und die Leistung durch hohe Auftriebsbeiwerte erreicht wird. Zusätzlich ist im Spitzenabschnitt die Verschmutzungsresistenz zu berücksichtigen. Solche Profileigenschaften für den Spitzenabschnitt lassen sich unter anderem durch ein Verlagern der Dickenrücklage in Richtung Profilvorderkante erreichen. Der Hauptdruckanstieg der Strömung um das Profil setzt dadurch frühzeitig ein, sodass insgesamt ein geringerer negativer Druckgradient von der Strömung überwunden werden muss. Auf diese Weise sind höhere Auftriebe erreichbar als mit Profilen mit höherer Dickenrücklage. Der geringe Anteil an laminarer Strömung an solchen Profilen hat eine bessere Profilleistung im turbulent umströmten Zustand zur Folge.

Der Mittelabschnitt weist im Wesentlichen solche Profilschnitte auf, die eine relative Profildicke zwischen 20 % und 30 % aufweisen. Die relative Profildicke ist definiert als das Verhältnis aus maximaler Profildicke zu Profiltiefe an einem Profilschnitt. Die relative Profildicke kann für jeden Profilschnitt entlang der Längsrichtung bestimmt werden. Die Werte für maximale Profildicke und Profiltiefe zur Bestimmung einer relativen Profildicke werden jeweils für einen Profilschnitt bestimmt. Das bedeutet insbesondere, dass die Werte für maximale Profildicke und Profiltiefe für eine Spannweitenkoordinate bestimmt werden. Das bedeutet insbesondere, dass zur Bestimmung der relativen Profildicke kein Wert einer maximalen Profildicke von einem ersten Profilschnitt und ein Wert der Profiltiefe von einem zweiten, von dem ersten verschiedenen Profilschnitt genutzt wird. Die Richtung der Profildicke und die Profilsehne sind im Wesentlichen orthogonal zueinander ausgerichtet. Profilschnitte mit einer relativen Dicke zwischen 20 % und 30 % können hohe Gleitleistungen ermöglichen. Darüber hinaus wird eine hohe Steifigkeit hinsichtlich Kräften und Momenten ermöglicht.

Dass der Mittelabschnitt im Wesentlichen solche Profilschnitte aufweist, die eine relative Profildicke zwischen 20 % und 30 % aufweisen, bedeutet insbesondere, dass der Mittelabschnitt auch solche Bereiche, insbesondere Zwischenbereiche, aufweisen kann, die Profilschnitte mit einer relativen Profildicke von weniger als 20 % oder mehr als 30 % umfassen. Vorzugsweise weist mehr als 80 % oder mehr als 90 % oder mehr als 95 % des Mittelabschnitts solche Profilschnitte auf, die eine relative Profildicke zwischen 20 % und 30 % aufweisen.

Der Erfindung liegt unter anderem die folgende Erkenntnis zugrunde. Am Blattflansch liegt in der Regel ein kreisförmiges Profil mit einer Dickenrücklage von 50 % und einer relativen Dicke von 100 % vor. An diesen Bereich schließen sich häufig Flatbackprofile mit einer hohen relativen Dicke an. Flatbackprofile weisen im Gegensatz zu geschlossenen Profilen an der Hinterkante eine flächige Erstreckung auf. Die flächige Erstreckung der Hinterkante ist deswegen vorteilhaft, da die Strömung aufgrund der hohen relativen Dicke einen starken negativen Druckgradienten überwinden muss, der bei Profilen mit einer geschlossenen Hinterkante zu groß wäre, sodass Strömungsablösung einsetzen würde.

Der Erfindung liegt ferner die Erkenntnis zugrunde, dass ein leistungs- und lastoptimales Rotorblatt einen auftriebsoptimierten Nabenabschnitt und/oder Spitzenabschnitt aufweist, und einen Mittelabschnitt, der ein lokales Minimum des Verlaufs des Auftriebsbeiwertes aufweist, wobei sich der Mittelabschnitt vorzugsweise durch eine hohe Gleitleistung auszeichnet. Infolgedessen kann ein Rotorblatt bereitgestellt werden, das eine hohe Leistungsfähigkeit aufweist und strukturell optimiert ist. Insbesondere kann im strukturell hochbelasteten Mittelabschnitt eine größere Profiltiefe vorgesehen werden, wodurch bei Konstanthalten der relativen Profildicke eine höhere Profildicke ermöglicht wird. Die höhere Profildicke und die höhere Profiltiefe resultieren in der Möglichkeit, eine bessere strukturelle Auslegung vorzunehmen, beispielsweise die Möglichkeit eines höheren Biegewiderstandsmoments und/oder eines höheren polaren Widerstandsmoments.

Der Nabenabschnitt grenzt an den Blattanschluss an. Der im Vorherigen genannte Spitzenabschnitt grenzt an die Blattspitze an. Der Begriff Nabenabschnitt, bzw. der Begriff Spitzenabschnitt ist nicht einschränkend. Insbesondere ist hierunter ein Abschnitt zu verstehen, der an dem Blattanschluss bzw. an die Blattspitze angrenzt, jedoch ist die Erstreckung in Richtung der Blattmitte durch die Begriffe als solche nicht eingeschränkt.

Das Rotorblatt erstreckt sich in Längsrichtung mit einem Verlauf einer Dickenrücklage, wobei die Dickenrücklage eines Profilschnitts definiert ist als das Verhältnis aus dem Abstand der maximalen Profildicke von einer Vorderkante des Rotorblatts in Richtung der Profilsehne und aus der Profiltiefe, wobei der Mittelabschnitt ein lokales Maximum der Dickenrücklage aufweist. Die Profilsehne ist im Profilschnitt insbesondere derart definiert, dass diese die Verbindungslinie zwischen der Hinterkante, gegebenenfalls zwischen einem Mittelpunkt der Hinterkante, und der Vorderkante ist. Der Mittelpunkt der Hinterkante ist vorzugsweise der Punkt auf einer flachen Hinterkante, beispielsweise eines Flatbackprofils, der die gleiche Beabstandung von der Druckseite und von der Saugseite aufweist. Der Betrag der Länge der Profilsehne ist im Wesentlichen als Profiltiefe zu verstehen.

Die Dickenrücklage bestimmt sich aus dem Abstand bzw. der Entfernung der maximalen Profildicke von der Vorderkante im Verhältnis zu der Profiltiefe. Der Abstand bzw. die Entfernung der maximalen Profildicke von der Vorderkante wird in Richtung der Profilsehne bestimmt. Ein Profilschnitt im Mittelabschnitt kann beispielsweise eine Profiltiefe von 2 m aufweisen, sodass sich das Rotorblatt an diesem Profilschnitt von der Vorderkante bis zur Hinterkante mit der Profiltiefe von 2 m erstreckt. Die maximale Profildicke kann an diesem Profilschnitt beispielsweise 70 cm von der Vorderkante beabstandet sein. Dieser Abstand von der Vorderkante wird in Richtung der Profilsehne ermittelt. Aus dem Verhältnis von 70 cm maximaler Profildicke und 2 m Profiltiefe, würde sich für den betrachteten Profilschnitt eine Dickenrücklage von 0,35 ergeben. Diese Rechnung ist selbstverständlich beispielhaft und auf sämtliche Verhältnisse von Profiltiefe und Position der maximalen Profildicke übertragbar.

Das absolute Maximum der Dickenrücklage befindet sich in der Regel in einem nabennahen Abschnitt, insbesondere in einem Abschnitt, der ein Kreiszylinderprofil aufweist, wobei Kreiszylinderprofile eine Dickenrücklage von 50 % aufweisen. Üblicherweise weisen Rotorblätter einen im Wesentlichen abfallenden und/oder konstanten Verlauf der Dickenrücklage auf. Durch eine Steigerung der Dickenrücklage im Mittelabschnitt kann der Bereich mit negativem Druckgradienten in der Strömung im vorderen Teil des Profils ausgedehnt und dadurch der Anteil an reibungsarmer laminarer Strömung im Mittelabschnitt erhöht werden. Dies führt zu einer verbesserten Gleitleistung, die die verminderten Auftriebsbeiwerte ausgleichen kann.

In einer bevorzugten Fortbildung des Rotorblatts ist vorgesehen, dass der Verlauf der Dickenrücklage in Längsrichtung zwischen Blattanschluss und Blattspitze S-förmig ist, das heißt zunächst ein lokales Minimum und dann das lokale Maximum aufweist.

In einer bevorzugten Fortbildung des Rotorblatts ist vorgesehen, dass der Verlauf der Dickenrücklage in Längsrichtung drei Wendepunkte aufweist, wobei ein erster Wendepunkt im Bereich zwischen 10 % und 25 % der relativen Rotorblattlänge und/oder ein zweiter Wendepunkt im Bereich zwischen 40 % und 50 % der relativen Rotorblattlänge und/oder ein dritter Wendepunkt im Bereich zwischen 65 % und 90 % der relativen Rotorblattlänge liegt.

In einer bevorzugten Fortbildung des Rotorblatts ist vorgesehen, dass das lokale Maximum der Dickenrücklage größer 0,35, insbesondere größer 0,4, beträgt. Derartige Werte für Dickenrücklagen sind für Rotorblätter von Windenergieanlagen ungewöhnlich. Überraschenderweise hat sich herausgestellt, dass solche Werte für Dickenrücklagen im Mittelabschnitt hohe Gleitleistungen erzeugen, sodass trotz geringerer Auftriebsbeiwerte eine hohe Rotorleistung erzielt werden kann.

Gemäß einer weiteren bevorzugten Ausführungsvariante ist vorgesehen, dass zwischen 30 % und 80 % einer relativen Rotorblattlänge die Dickenrücklage zwischen 0,35 und 0,4 beträgt. Die relative Rotorblattlänge ist definiert zwischen 0 % und 100 %. 0 % charakterisiert ein nabenzugewandtes Ende, bzw. ein Ende, das dem Blattanschluss bzw. einem Rotorblattflansch zugewandt ist. 100 % der relativen Rotorblattlänge charakterisiert eine Blattspitze. Die Spannweite von 0,35 bis 0,4 für die Dickenrücklage im Bereich von 30 % bis 80 % der relativen Rotorblattlänge stellt einen ungewöhnlich hohen Wert dar, jedoch hat sich herausgestellt, dass mit diesem Bereich überraschenderweise eine hohe Rotorleistung und eine gute strukturelle Auslegbarkeit des Rotorblatts ermöglicht wird.

Gemäß einer weiteren bevorzugten Ausführungsvariante ist vorgesehen, dass zwischen 0 % und 30 % der relativen Rotorblattlänge die Dickenrücklage zwischen 0,25 und 0,5 beträgt und wobei vorzugsweise die Dickenrücklage zwischen 0 % hin zu 30 % der relativen Rotorblattlänge abnimmt.

Darüber hinaus kann es bevorzugt sein, dass zwischen 80 % und 100 % der relativen Rotorblattlänge die Dickenrücklage zwischen 0,25 und 0,35 beträgt und wobei vorzugsweise die Dickenrücklage zwischen 80 % hin zu 100 % ein lokales Minimum aufweist.

Außerdem kann vorgesehen sein, dass das Rotorblatt zwischen 0 % und 40 % der relativen Rotorblattlänge ein Minimum der Dickenrücklage aufweist, wobei vorzugsweise das Minimum der Dickenrücklage kleiner 0,35, insbesondere kleiner 0,3, beträgt. Das Minimum der Dickenrücklage kann außerdem bevorzugt zwischen 20 % und 40 % der relativen Rotorblattlänge, insbesondere zwischen 25 % und 35 %, vorgesehen sein.

In einer besonders bevorzugten Ausführungsvariante des Rotorblatts ist vorgesehen, dass sich der Nabenabschnitt zwischen 0 % und 30 % der relativen Rotorblattlänge erstreckt, und/oder sich der Mittelabschnitt zwischen 30 % und 80 % der relativen Rotorblattlänge erstreckt, und/oder sich der Spitzenabschnitt zwischen 80 % und 100 % der relativen Rotorblattlänge erstreckt.

Es ist bevorzugt, dass die relative Profildicke des Rotorblatts zwischen 15 % und 100 % beträgt. In einer weiteren bevorzugten Fortbildung des Rotorblatts ist vorgesehen, dass dieses zumindest abschnittsweise ein Flatbackprofil aufweist, wobei vorzugsweise das Flatbackprofil im Nabenabschnitt angeordnet ist.

Flatbackprofile weichen von den üblicherweise vorgesehenen geschlossenen Profilen ab. Insbesondere weichen diese an der Hinterkante von einem geschlossenen Profil dahingehend ab, dass diese eine gerade Hinterkante aufweisen, sodass das Profil eine flächig ausgebildete Hinterkante und keine linienförmig ausgebildete Hinterkante aufweist. Durch den längeren Druckanstieg können größere Druckgradienten überwunden werden und die Höhe der abgeflachten Hinterkante kann reduziert werden, sodass sich der Widerstand verringert. Darüber hinaus können solche Profile höhere Auftriebe liefern als herkömmliche Blattwurzelprofile.

Gemäß einem weiteren Aspekt wird die eingangs genannte Aufgabe gelöst durch eine Windenergieanlage mit mindestens einem Rotorblatt nach einem der im Vorherigen beschriebenen Ausführungsvarianten.

Darüber hinaus wird die eingangs genannte Aufgabe gelöst durch einen Windpark mit mindestens zwei Windenergieanlagen nach dem vorherigen Aspekt.

Des Weiteren wird die eingangs genannte Aufgabe gelöst durch ein Verfahren zur Auslegung eines Rotorblatts, das sich in Längsrichtung mit einem Profilverlauf von einem Blattanschluss zu einer Blattspitze erstreckt, wobei der Profilverlauf einen Verlauf eines Auftriebsbeiwerts aufweist, umfassend einen an den Blattanschluss angrenzenden Nabenabschnitt und einen an die Blattspitze angrenzenden Spitzenabschnitt, einen an den Nabenabschnitt und an den Spitzenabschnitt angrenzenden Mittelabschnitt, wobei für den Mittelabschnitt im Wesentlichen solche Profilschnitte gewählt werden, die eine als Verhältnis aus maximaler Profildicke zu Profiltiefe definierte relative Profildicke zwischen 20 % und 30 % aufweisen, und wobei der Verlauf des Auftriebsbeiwertes im Mittelabschnitt derart gewählt wird, das dieser ein lokales Minimum des Verlaufs des Auftriebsbeiwertes aufweist.

Das Verfahren und seine möglichen Fortbildungen weisen Merkmale bzw. Verfahrensschritte auf, die sie insbesondere dafür geeignet machen, für ein Rotorblatt gemäß dem ersten Aspekt und seine Fortbildungen verwendet zu werden. Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Rotorblatts verwiesen.

Bevorzugte Ausführungsbeispiele werden exemplarisch anhand der beiliegenden Figuren erläutert. Es zeigen:
- Fig. 1:: eine schematische, dreidimensionale Ansicht einer beispielhaften Ausführungsform einer Windenergieanlage;
- Fig. 2:: schematische Verläufe von Dickenrücklagen eines herkömmlichen Rotorblatts und eines Rotorblatts mit einem lokalen Minimum des Verlaufs des Auftriebsbeiwerts im Mittelabschnitt;
- Fig. 3:: schematische Verläufe von Blatttiefen eines herkömmlichen Rotorblatts und eines Rotorblatts mit einem lokalen Minimum des Verlaufs des Auftriebsbeiwerts im Mittelabschnitt;
- Fig. 4:: schematische Verläufe von Blattdicken eines herkömmlichen Rotorblatts und eines Rotorblatts mit einem lokalen Minimum des Verlaufs des Auftriebsbeiwerts im Mittelabschnitt; und
- Fig. 5:: schematische Verläufe von Gleitleistungen eines herkömmlichen Rotorblatts und eines Rotorblatts mit einem lokalen Minimum des Verlaufs des Auftriebsbeiwerts im Mittelabschnitt.

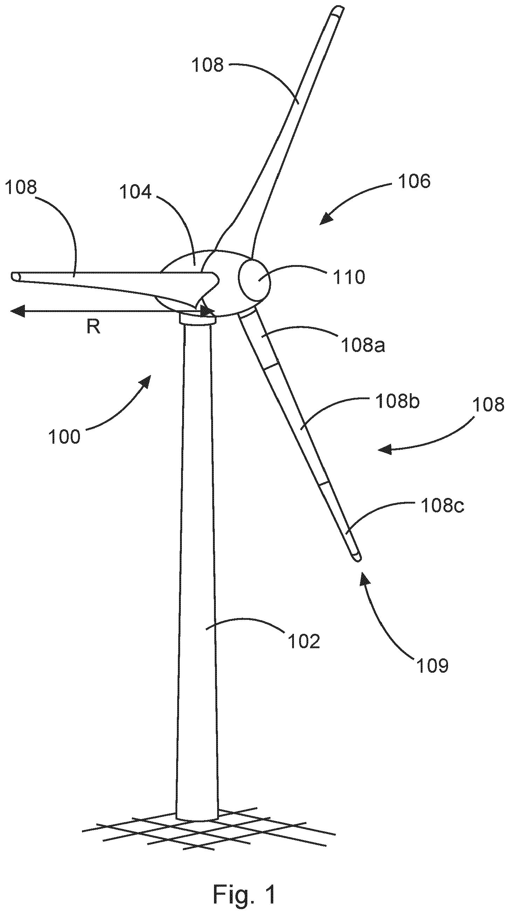

Fig. 1 zeigt eine schematische, dreidimensionale Ansicht einer beispielhaften Ausführungsform einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 108, die jeweils eine Rotorblattlänge R aufweisen, und ein Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Die Rotorblätter 108 weisen jeweils einen Nabenabschnitt 108a, einen Mittelabschnitt 108b und einen Spitzenabschnitt 108c auf. Der Nabenabschnitt 108a ist einer an der Gondel 104 angeordneten Nabe zugewandt. Der Spitzenabschnitt 108c ist der distale Abschnitt des Rotorblatts 108 und der Nabe und der Gondel 104 abgewandt. Der Spitzenabschnitt 108c erstreckt sich ausgehend von einer Blattspitze 109 in Richtung der Nabe. Der Mittelabschnitt 108b ist zwischen dem Nabenabschnitt 108a und dem Spitzenabschnitt 108c angeordnet.

Die Rotorblätter 108 weisen in Längsrichtung einen Profilverlauf auf. Die Profilschnitte ändern sich also mit der Längsrichtung eines Rotorblatts. Der Profilverlauf zeichnet sich durch einen Verlauf eines Auftriebsbeiwerts aus. Die relative Dicke der Rotorblätter 108 beträgt im jeweiligen Mittelabschnitt 108b zwischen 20 % und 30 %. Die Auftriebsbeiwerte sind im Mittelabschnitt 108b geringer als im Nabenabschnitt 108a und geringer als im Spitzenabschnitt 108c. Unter einem Auftriebsbeiwert wird vorliegend ein Auslegungsauftriebsbeiwert verstanden.

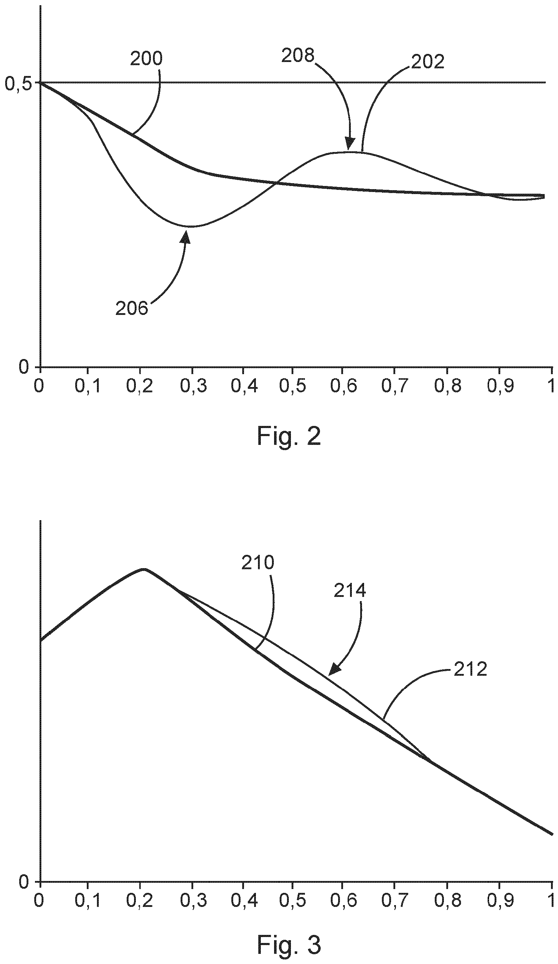

Fig. 2 zeigt schematische Verläufe von Dickenrücklagen eines herkömmlichen Rotorblatts und eines Rotorblatts mit einem lokalen Minimum des Verlaufs des Auftriebsbeiwerts im Mittelabschnitt. Auf der Abszisse ist die relative Rotorblattlänge zwischen 0 und 1, bzw. zwischen 0 % und 100 % aufgetragen. Auf der Ordinate ist die Dickenrücklage aufgetragen.

Der erste Verlauf einer Dickenrücklage 200 repräsentiert den Verlauf einer Dickenrücklage eines herkömmlichen Rotorblatts. Die Dickenrücklage 200 des herkömmlichen Rotorblatts fällt von 0,5 im nabennahen Bereich auf einen Wert von ca. 0,4 ab und ist dann zwischen 30 % und 100 % der relativen Rotorblattlänge nahezu konstant.

Im Gegensatz hierzu verändert sich ein Verlauf einer Dickenrücklage 202 eines Rotorblatts gemäß der Erfindung entlang der relativen Rotorblattlänge stärker. Im nabennahen Bereich, also im Nabenabschnitt 108a, reduziert sich die Dickenrücklage stark zwischen 0 % und 30 % der relativen Rotorblattlänge. Bei ca. 30 % der relativen Rotorblattlänge weist der Verlauf der Dickenrücklage 202 ein Minimum 206 auf. Von dem Minimum 206 bei 30 % der relativen Rotorblattlänge steigt der Verlauf der Dickenrücklage 202 des Rotorblatts 108 hin zu einem lokalen Maximum 208 bei ca. 60 % der relativen Rotorblattlänge an. Von dem Maximum 208, das bei ca. 0,4 liegt, fällt der Verlauf der Dickenrücklage 202 zwischen 60 % und 90 % der relativen Rotorblattlänge ab. Zwischen 90 % und 100 % der relativen Rotorblattlänge ist der Verlauf der Dickenrücklage 202 im Wesentlichen konstant. Bei 90 % der relativen Rotorblattlänge liegt ein lokales Minimum des Verlaufs der Dickenrücklage 202 vor.

Kurzgefasst kann gesehen werden, dass der Verlauf der Dickenrücklage 202 über die Rotorblattlänge S-förmig ist, das heißt zwischen Blattanschluss und Blattspitze zunächst ein lokales Minimum 206 und dann ein lokales Maximum 208 aufweist.

Fig. 3 zeigt schematische Verläufe von Blatttiefen eines herkömmlichen Rotorblatts und eines Rotorblatts 108 mit einem lokalen Minimum des Verlaufs des Auftriebsbeiwerts im Mittelabschnitt. Auf der Abszisse ist auch hier die relative Rotorblattlänge zwischen 0 und 1, bzw. zwischen 0 % und 100 % aufgetragen. Auf der Abszisse ist qualitativ die Profiltiefe von Rotorblättern aufgetragen. Der Verlauf der Profiltiefe 210 repräsentiert die Profiltiefe eines herkömmlichen Rotorblatts. Der Verlauf der Profiltiefe 212 repräsentiert den Verlauf einer Profiltiefe eines Rotorblatts gemäß der Erfindung.

Es ist ersichtlich, dass die Profiltiefe in einem Bereich 214 zwischen 30 % und 80 % der relativen Rotorblattlänge größer ist als bei herkömmlichen Rotorblättern. Durch die vergrößerte Profiltiefe 212 im Bereich 214 kann dieses Rotorblatt 108 mit einer größeren Profildicke vorgesehen werden, wobei dennoch eine gleichbleibende relative Profildicke erreicht wird. Aufgrund dessen kann die Gleitleistung des Rotorblatts 108 im Mittelabschnitt 108b, insbesondere im Bereich 214, mit dem Verlauf der Profiltiefe 212 verbessert werden.

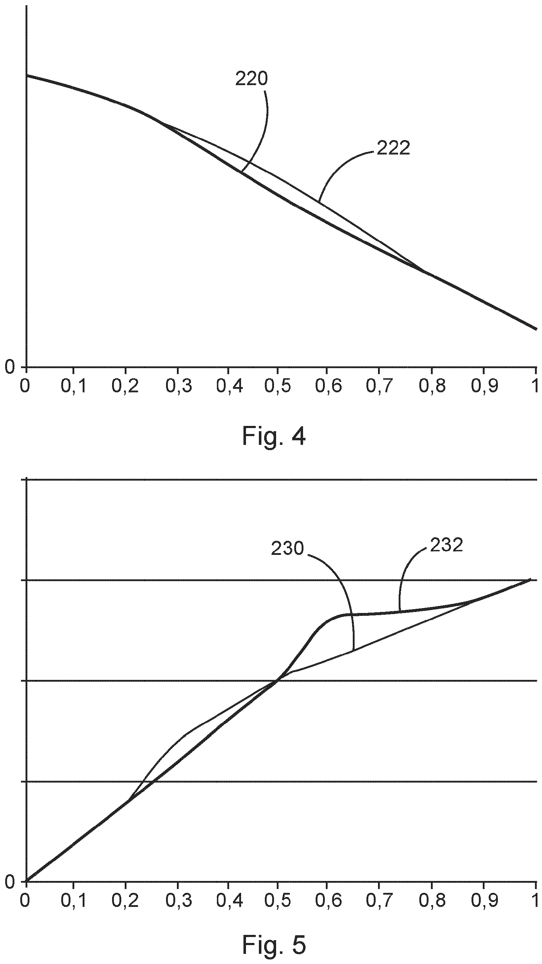

Fig. 4 zeigt schematische Verläufe von Blattdicken eines herkömmlichen Rotorblatts und eines Rotorblatts 108 mit einem lokalen Minimum des Verlaufs des Auftriebsbeiwerts im Mittelabschnitt. Auf der Abszisse ist auch hier die relative Rotorblattlänge zwischen 0 und 1, bzw. zwischen 0 % und 100 % aufgetragen. Der Verlauf der Blattdicke 220 repräsentiert den Verlauf der Blattdicke eines herkömmlichen Rotorblatts. Der Verlauf der Blattdicke 222 repräsentiert den Verlauf eines Rotorblatts 108 gemäß der Erfindung. Es ist ersichtlich, dass die Blattdicke 222 in einem Bereich zwischen 30 % und 80 % der relativen Rotorblattlänge größer ist als bei dem herkömmlichen Rotorblatt. Folglich kann mit der in Fig. 3 gezeigten höheren Profiltiefe in diesem Rotorblattabschnitt eine im Wesentlichen gleichbleibende relative Dicke erreicht werden und dennoch eine gesteigerte Gleitleistung erzielt werden.

Fig. 5 zeigt schematische Verläufe von Gleitleistungen eines herkömmlichen Rotorblatts und eines Rotorblatts 108 mit einem lokalen Minimum des Verlaufs des Auftriebsbeiwerts im Mittelabschnitt. Auf der Abszisse ist wiederum die relative Rotorblattlänge zwischen 0 und 1, bzw. zwischen 0 % und 100 % aufgetragen. Auf der Ordinate ist die Gleitleistung qualitativ aufgetragen. Der Verlauf der Gleitleistung 230 repräsentiert den Verlauf einer Gleitleistung eines herkömmlichen Rotorblatts. Der Verlauf der Gleitleistung 232 repräsentiert den Verlauf einer Gleitleistung eines Rotorblatts 108 gemäß der Erfindung.

Es ist ersichtlich, dass die Gleitleistung 232 in zwei Abschnitten deutlich höher ist als die Gleitleistung des herkömmlichen Rotorblatts. Insbesondere im Bereich zwischen 20 % und 45 % sowie zwischen 50 % und 80 % der relativen Rotorblattlänge können Steigerungen der Gleitleistung erreicht werden, indem eine höhere Profiltiefe, eine höhere Profildicke und ein verminderter Auftriebsbeiwert realisiert werden.

### BEZUGSZEICHEN

- 100: Windenergieanlage
- 102: Turm
- 104: Gondel
- 106: Rotor
- 108: Rotorblätter
- 109: Blattspitze
- 110: Spinner
- 108a: Nabenabschnitt
- 108b: Mittelabschnitt
- 108c: Spitzenabschnitt
- 200: Verlauf einer Dickenrücklage
- 202: Verlauf einer Dickenrücklage
- 206: Minimum
- 208: Maximum
- 210: Verlauf einer Profiltiefe
- 212: Verlauf einer Profiltiefe
- 214: Bereich größerer Profiltiefe
- 220: Verlauf einer Blattdicke
- 222: Verlauf einer Blattdicke
- 230: Verlauf einer Gleitleistung (L/D)
- 232: Verlauf einer Gleitleistung (L/D)
- R: Rotorblattlänge

### BEZUGSZEICHEN

- 100: Windenergieanlage
- 102: Turm
- 104: Gondel
- 106: Rotor
- 108: Rotorblätter
- 109: Blattspitze
- 110: Spinner
- 108a: Nabenabschnitt
- 108b: Mittelabschnitt
- 108c: Spitzenabschnitt
- 200: Verlauf einer Dickenrücklage
- 202: Verlauf einer Dickenrücklage
- 206: Minimum
- 208: Maximum
- 210: Verlauf einer Profiltiefe
- 212: Verlauf einer Profiltiefe
- 214: Bereich größerer Profiltiefe
- 220: Verlauf einer Blattdicke
- 222: Verlauf einer Blattdicke
- 230: Verlauf einer Gleitleistung (L/D)
- 232: Verlauf einer Gleitleistung (L/D)
- R: Rotorblattlänge

## Patentansprüche

1. Rotorblatt (108) für eine Windenergieanlage (100), das sich in Längsrichtung mit einem Profilverlauf von einem Blattanschluss zu einer Blattspitze erstreckt, wobei der Profilverlauf einen Verlauf eines Auftriebsbeiwerts aufweist, umfassend
- einen an den Blattanschluss angrenzenden Nabenabschnitt (108a) und einen an die Blattspitze angrenzenden Spitzenabschnitt (108c),
- einen an den Nabenabschnitt (108a) und an den Spitzenabschnitt (108c) angrenzenden Mittelabschnitt (108b),
- wobei der Mittelabschnitt im Wesentlichen solche Profilschnitte aufweist, die eine als Verhältnis aus maximaler Profildicke zu Profiltiefe definierte relative Profildicke zwischen 20 % und 30 % aufweisen, und
- wobei der Mittelabschnitt (108b) ein lokales Minimum des Verlaufs des Auftriebsbeiwertes aufweist,
**dadurch gekennzeichnet, dass** sich das Rotorblatt (108) in Längsrichtung mit einem Verlauf einer Dickenrücklage (202) erstreckt, wobei die Dickenrücklage (202) eines Profilschnitts definiert ist als das Verhältnis aus dem Abstand der maximalen Profildicke von einer Vorderkante des Rotorblatts (108) in Richtung der Profilsehne und aus der Profiltiefe, wobei der Mittelabschnitt (108b) ein lokales Maximum der Dickenrücklage (202) aufweist.

2. Rotorblatt (108) nach Anspruch 1, wobei der Verlauf der Dickenrücklage (202) in Längsrichtung zwischen Blattanschluss und Blattspitze S-förmig ist, das heißt zunächst ein lokales Minimum und dann das lokale Maximum aufweist.

3. Rotorblatt (108) nach Anspruch 2, wobei der Verlauf der Dickenrücklage (202) in Längsrichtung drei Wendepunkte aufweist, wobei ein erster Wendepunkt im Bereich zwischen 10 % und 25 % der relativen Rotorblattlänge und/oder ein zweiter Wendepunkt im Bereich zwischen 40 % und 50 % der relativen Rotorblattlänge und/oder ein dritter Wendepunkt im Bereich zwischen 65 % und 90 % der relativen Rotorblattlänge liegt.

4. Rotorblatt (108) nach einem der Ansprüche 1-3, wobei
das lokale Maximum (208) der Dickenrücklage (202) größer 0,35, insbesondere größer 0,4, beträgt.

5. Rotorblatt (108) nach einem der Ansprüche 1-4, wobei
zwischen 30 % und 80 % einer relativen Rotorblattlänge die Dickenrücklage (202) zwischen 0,35 und 0,4 beträgt.

6. Rotorblatt (108) nach einem der Ansprüche 1-5, wobei
zwischen 0 % und 30 % der relativen Rotorblattlänge die Dickenrücklage (202) zwischen 0,25 und 0,5 beträgt und wobei vorzugsweise die Dickenrücklage (202) zwischen 0 % hin zu 30 % der relativen Rotorblattlänge abnimmt.

7. Rotorblatt (108) nach einem der Ansprüche 1-6, wobei
zwischen 80 % und 100 % der relativen Rotorblattlänge die Dickenrücklage (202) zwischen 0,25 und 0,35 beträgt und wobei vorzugsweise die Dickenrücklage (202) zwischen 80 % hin zu 100 % ein lokales Minimum aufweist.

8. Rotorblatt (108) nach einem der Ansprüche 1-7, wobei
das Rotorblatt (108) zwischen 0 % und 40 % der relativen Rotorblattlänge ein Minimum der Dickenrücklage (202) aufweist, wobei vorzugsweise das Minimum der Dickenrücklage (202) kleiner 0,35, insbesondere kleiner 0,3, beträgt.

9. Rotorblatt (108) nach einem der vorherigen Ansprüche, wobei
sich der Nabenabschnitt (108a) zwischen 0 % und 30 % der relativen Rotorblattlänge erstreckt, und/oder
sich der Mittelabschnitt (108b) zwischen 30 % und 80 % der relativen Rotorblattlänge erstreckt, und/oder
sich der Spitzenabschnitt (108c) zwischen 80 % und 100 % der relativen Rotorblattlänge erstreckt.

10. Rotorblatt (108) nach einem der vorherigen Ansprüche, wobei
die relative Profildicke des Rotorblatts (108) zwischen 15 % und 100 % beträgt.

11. Rotorblatt (108) nach einem der vorherigen Ansprüche, wobei
dieses zumindest abschnittsweise ein Flatbackprofil aufweist, wobei vorzugsweise das Flatbackprofil im Nabenabschnitt (108a) angeordnet ist.

12. Windenergieanlage (100) mit mindestens einem Rotorblatt (108) nach einem der vorherigen Ansprüche 1-11.

13. Windpark mit mindestens zwei Windenergieanlagen (100) nach dem vorherigen Anspruch 12.

14. Verfahren zur Auslegung eines Rotorblatts (108), das sich in Längsrichtung mit einem Profilverlauf von einem Blattanschluss zu einer Blattspitze erstreckt, wobei der Profilverlauf einen Verlauf eines Auftriebsbeiwerts aufweist, umfassend einen an den Blattanschluss angrenzenden Nabenabschnitt (108a) und einen an die Blattspitze angrenzenden Spitzenabschnitt (108c), einen an den Nabenabschnitt (108a) und an den Spitzenabschnitt (108c) angrenzenden Mittelabschnitt (108b), wobei für den Mittelabschnitt im Wesentlichen solche Profilschnitte gewählt werden, die eine als Verhältnis aus maximaler Profildicke zu Profiltiefe definierte relative Profildicke zwischen 20 % und 30 % aufweisen, und wobei der Verlauf des Auftriebsbeiwertes im Mittelabschnitt (108b) derart gewählt wird, das dieser ein lokales Minimum des Verlaufs des Auftriebsbeiwertes aufweist,
**dadurch gekennzeichnet, dass** sich das Rotorblatt (108) in Längsrichtung mit einem Verlauf einer Dickenrücklage (202) erstreckt, wobei die Dickenrücklage (202) eines Profilschnitts definiert ist als das Verhältnis aus dem Abstand der maximalen Profildicke von einer Vorderkante des Rotorblatts (108) in Richtung der Profilsehne und aus der Profiltiefe, **dadurch gekennzeichnet, dass** das Verfahren ein Auslegen des Mittelabschnittes (108b) umfasst, derart, dass der Mittelabschnitt (108b) ein lokales Maximum der Dickenrücklage (202) aufweist.

## Claims

1. A rotor blade (108) for a wind turbine (100), which extends in the longitudinal direction with a profile course from a blade connector to a blade tip, wherein the profile course comprises a profile of a lift coefficient, comprising
- a hub portion (108a) adjacent to the blade connector and a tip portion (108c) adjacent to the blade tip,
- a middle portion (108b) adjacent to the hub portion (108a) and to the tip portion (108c),
- wherein the middle portion substantially comprises those profile sections which have a relative profile thickness, which is defined as the ratio of maximum profile thickness to profile depth, of between 20% and 30%, and
- wherein the middle portion (108b) comprises a local minimum of the course of the lift coefficient,
**characterized by**
the rotor blade (108) extending in the longitudinal direction with a course of a thickness setback (202), wherein the thickness setback (202) of a profile section is defined as the ratio of the distance between the maximum profile thickness and a leading edge of the rotor blade (108) in the direction of the profile chord to the profile depth, wherein the middle portion (108b) comprises a local maximum of the thickness setback (202).

2. The rotor blade (108) as claimed in claim 1, wherein the course of the thickness setback (202) in the longitudinal direction between blade connector and blade tip is S-shaped, that is to say first of all comprises a local minimum and then the local maximum.

3. The rotor blade (108) as claimed in claim 2, wherein the course of the thickness setback (202) in the longitudinal direction has three turning points, wherein a first turning point lies in the range between 10% and 25% of the relative rotor blade length, and/or a second turning point lies in the range between 40% and 50% of the relative rotor blade length, and/or a third turning point lies in the range between 65% and 90% of the relative rotor blade length.

4. The rotor blade (108) as claimed in one of claims 1-3, wherein
the local minimum (208) of the thickness setback (202) is greater than 0.35, in particular greater than 0.4.

5. The rotor blade (108) as claimed in one of claims 1-4, wherein
between 30% and 80% of a relative rotor blade length, the thickness setback (202) is between 0.35 and 0.4.

6. The rotor blade (108) as claimed in one of claims 1-5, wherein
between 0% and 30% of the relative rotor blade length, the thickness setback (202) is between 0.25 and 0.5, and wherein preferably the thickness setback (202) decreases between 0% to 30% of the relative rotor blade length.

7. The rotor blade (108) as claimed in one of claims 1-6, wherein
between 80% and 100% of the relative rotor blade length, the thickness setback (202) is between 0.25 and 0.35, and wherein, between 80% to 100%, the thickness setback (202) preferably comprises a local minimum.

8. The rotor blade (108) as claimed in one of claims 1-7, wherein,
between 0% and 40% of the relative rotor blade length, the rotor blade (108) comprises a minimum of the thickness setback (202), wherein the minimum of the thickness setback (202) is preferably smaller than 0.35, in particular smaller than 0.3.

9. The rotor blade (108) as claimed in one of the preceding claims, wherein
the hub portion (108a) extends between 0% and 30% of the relative rotor blade length, and/or
the middle portion (108b) extends between 30% and 80% of the relative rotor blade length, and/or
the tip portion (108c) extends between 80% and 100% of the relative rotor blade length.

10. The rotor blade (108) as claimed in one of the preceding claims, wherein
the relative profile thickness of the rotor blade (108) is between 15% and 100%.

11. The rotor blade (108) as claimed in one of the preceding claims, wherein
said rotor blade has a flatback profile at least in portions, wherein preferably the flatback profile is arranged in the hub portion (108a).

12. A wind turbine (100) having at least one rotor blade (108) as claimed in one of the preceding claims 1-11.

13. A windfarm having at least two wind turbines (100) as claimed in the preceding claim 12.

14. A method for designing a rotor blade (108), which extends in the longitudinal direction with a profile course from a blade connector to a blade tip, wherein the profile course comprises a profile of a lift coefficient, comprising a hub portion (108a) adjacent to the blade connector and a tip portion (108c) adjacent to the blade tip, a middle portion (108b) adjacent to the hub portion (108a) and to the tip portion (108c), wherein, for the middle portion, essentially those profile sections are selected which have a relative profile thickness, which is defined as a ratio of maximum profile thickness to profile depth, of between 20% and 30%, and wherein the profile of the lift coefficient in the middle portion (108b) is selected in such a manner that it comprises a local minimum of the course of the lift coefficient,
**characterized by**
the rotor blade extending (108) in the longitudinal direction with a course of a thickness setback (202), wherein the thickness setback (202) of a profile section is defined as the ratio of the distance between the maximum profile thickness and a leading edge of the rotor blade (108) in the direction of the profile chord to the profile depth, wherein the middle portion (108b) comprises a local maximum of the thickness setback (202).

## Revendications

1. Pale de rotor (108) pour une éolienne (100), qui s'étend dans la direction longitudinale avec un tracé de profil à partir d'un raccordement de pale vers un bout de pale, dans laquelle le tracé de profil présente un tracé d'un profil de portance, comprenant
- une partie de moyeu (108a) adjacente au raccordement de pale et une partie de pointe (108c) adjacente au bout de pale,
- une partie centrale (108b) adjacente à la partie de moyeu (108a) et à la partie de pointe (108c),
- dans laquelle la partie centrale présente sensiblement des profils en coupe tels qu'ils présentent une épaisseur de profil relative définie comme rapport de l'épaisseur de profil maximale à la profondeur de profil comprise entre 20 % et 30 %, et
- dans laquelle la partie centrale (108b) présente un minimum local du tracé du coefficient de portance,
**caractérisée en ce que**
la pale de rotor (108) s'étend dans la direction longitudinale avec un tracé d'une réserve d'épaisseur (202), dans laquelle la réserve d'épaisseur (202) d'un profil en coupe est définie comme le rapport de l'écart de l'épaisseur de profil maximale à partir d'un bord avant de la pale de rotor (108) en direction de la corde de profil et de la profondeur de profil, dans laquelle la partie centrale (108b) présente un maximum local de la réserve d'épaisseur (202).

2. Pale de rotor (108) selon la revendication 1, dans laquelle le tracé de la réserve d'épaisseur (202) dans la direction longitudinale entre le raccordement de pale et le bout de pale est en forme de S, ce qui signifie qu'il présente tout d'abord un minimum local et ensuite le maximum local.

3. Pale de rotor (108) selon la revendication 2, dans laquelle le tracé de la réserve d'épaisseur (202) présente dans la direction longitudinale trois points d'inflexion, dans laquelle un premier point d'inflexion se situe dans la plage comprise entre 10 % et 25 % de la longueur de pale de rotor relative et/ou un deuxième point d'inflexion dans la plage comprise entre 40 % et 50 % de la longueur de pale de rotor relative et/ou un troisième point d'inflexion dans la plage comprise entre 65 % et 90 % de la longueur de pale de rotor relative.

4. Pale de rotor (108) selon l'une quelconque des revendications 1-3, dans laquelle
le maximum local (208) de la réserve d'épaisseur (202) est supérieur à 0,35, en particulier supérieur à 0,4.

5. Pale de rotor (108) selon l'une quelconque des revendications 1-4, dans laquelle
entre 30 % et 80 % d'une longueur de pale de rotor relative la réserve d'épaisseur (202) est comprise entre 0,35 et 0,4.

6. Pale de rotor (108) selon l'une quelconque des revendications 1-5, dans laquelle
entre 0 % et 30 % de la longueur de pale de rotor relative la réserve d'épaisseur (202) est comprise entre 0,25 et 0,5 et dans laquelle de préférence la réserve d'épaisseur (202) diminue entre 0 % jusqu'à 30 % de la longueur de pale de rotor relative.

7. Pale de rotor (108) selon l'une quelconque des revendications 1-6, dans laquelle
entre 80 % et 100 % de la longueur de pale de rotor relative la réserve d'épaisseur (202) est comprise entre 0,25 et 0,35 et dans laquelle de préférence la réserve d'épaisseur (202) entre 80 % jusqu'à 100 % présente un minimum local.

8. Pale de rotor (108) selon l'une quelconque des revendications 1- 7, dans laquelle
la pale de rotor (108) entre 0 % et 40 % de la longueur de pale de rotor relative présente un minimum de la réserve d'épaisseur (202), dans laquelle de préférence le minimum de la réserve d'épaisseur (202) est inférieur à 0,35, en particulier inférieur à 0,3.

9. Pale de rotor (108) selon l'une quelconque des revendications précédentes, dans laquelle
la partie de moyeu (108a) s'étend entre 0 % et 30 % de la longueur de pale de rotor relative, et/ou
la partie centrale (108b) s'étend entre 30 % et 80 % de la longueur de pale de rotor relative, et/ou
la partie de pointe (108c) s'étend entre 80 % et 100 % de la longueur de pale de rotor relative.

10. Pale de rotor (108) selon l'une quelconque des revendications précédentes, dans laquelle
l'épaisseur de profil relative de la pale de rotor (108) est comprise entre 15 % et 100 %.

11. Pale de rotor (108) selon l'une quelconque des revendications précédentes, dans laquelle
celle-ci présente au moins sur certaines parties un profil de dos plat, dans laquelle de préférence le profil de dos plat est disposé dans la partie de moyeu (108a).

12. Eolienne (100) avec au moins une pale de rotor (108) selon l'une quelconque des revendications précédentes 1-11.

13. Parc éolien avec au moins deux éoliennes (100) selon la revendication précédente 12.

14. Procédé pour la conception d'une pale de rotor (108), qui s'étend dans la direction longitudinale avec un tracé de profil d'un raccordement de pale à un bout de pale, dans lequel le tracé de profil présente un tracé d'un profil de portance, comprenant une partie de moyeu (108a) adjacente au raccordement de pale et une partie de pointe (108c) adjacente au bout de pale, une partie centrale (108b) adjacente à la partie de moyeu (108a) et à la partie de pointe (108c), dans lequel pour la partie centrale sensiblement des profils en coupe tels que ceux qui présentent une épaisseur de profil relative définie comme rapport de l'épaisseur de profil maximale à la profondeur de profil comprise entre 20 % et 30 %, sont sélectionnés, et dans lequel le tracé du coefficient de portance dans la partie centrale (108b) est sélectionné de telle sorte que celui-ci présente un minimum local du tracé du coefficient de portance,
**caractérisé en ce que**
la pale de rotor (108) dans la direction longitudinale s'étend avec un tracé d'une réserve d'épaisseur (202), dans lequel la réserve d'épaisseur (202) d'un profil en coupe est définie comme le rapport de l'écart de l'épaisseur de profil maximale d'un bord avant de la pale de rotor (108) en direction de la corde de profil et de la profondeur de profil, **caractérisé en ce que** le procédé comprend une conception de la partie centrale (108b) telle que la partie centrale (108b) présente un maximum local de la réserve d'épaisseur (202) .
